# EUROPEAN PATENT SPECIFICATION

(11) **EP 4 265 979 B1**
(45) Date of publication and mention of the grant of the patent: **06.05.2026**
(21) Application number: 21905261.0
(22) Date of filing: 15.10.2021
(51) Int. Cl.: F24H 4/02, F24H 15/39, F24H 15/223, F24H 4/04, F24H 9/20, F25B 30/00, F25B 13/00, F25B 5/04, F25B 6/04, F25B 41/39, F25B 49/02

(54) **HEAT-PUMP WATER HEATER, AND CONTROL METHOD THEREFOR**
WÄRMEPUMPENWASSERERHITZER UND STEUERUNGSVERFAHREN DAFÜR
CHAUFFE-EAU À POMPE À CHALEUR, ET SON PROCÉDÉ DE COMMANDE

(30) Priority: 17.12.2020 CN 202011497611
(43) Date of publication of application: 25.10.2023
(73) Proprietor: Qingdao Haier New Energy Appliance Co., Ltd., Jiaonan Qingdao, Shandong 266100 (CN); Qingdao Economic and Technological Development Zone Haier Water Heater Co., Ltd., Qingdao, Shangdong 266510 (CN); Haier Smart Home Co., Ltd., Qingdao, Shandong 266101 (CN)
(72) Inventor: DU, Shunxiang, Qingdao, Shandong 266100 (CN); CHEN, Bingquan, Qingdao, Shandong 266100 (CN); YU, Jinjian, Qingdao, Shandong 266100 (CN); HUANG, Juan, Qingdao, Shandong 266100 (CN); ZHAO, Runpeng, Qingdao, Shandong 266100 (CN); ZHANG, Xiaoqi, Qingdao, Shandong 266100 (CN); HUANG, Junji, Qingdao, Shandong 266100 (CN)
(74) Representative: Elzaburu S.L.P.
(86) International application number: PCT/CN2021/124219
(87) International publication number: WO 2022/127332

(56) References cited:
- WO-A1-2018/107982
- CN-A- 106 468 477
- CN-A- 106 871 476
- CN-A- 110 500 803
- CN-A- 110 906 588
- CN-A- 110 906 588
- CN-A- 110 986 436
- CN-A- 110 986 436
- CN-A- 112 033 003
- CN-A- 112 033 003
- CN-A- 112 629 020
- JP-A- 2007 093 097

## Description

### TECHNICAL FIELD

The invention relates to the technical field of household appliances, and in particular to a heat-pump water heater and a control method for the heat-pump water heater.

### BACKGROUND

Heat-pump water heater is a device that uses a refrigerant to absorb low-temperature heat energy in air and transfer it to a water tank to prepare hot water, which has advantages of energy saving and high efficiency.

Specifically, a heat-pump water heater includes a water tank, an evaporator, a compressor, a primary expansion valve and a condenser. The condenser is disposed in the water tank, and the primary expansion valve is provided between the condenser and the evaporator. When the heat-pump water heater is on service, the evaporator absorbs heat in the surrounding environment, such that the refrigerant at the evaporator is heated up and gasified into a low-temperature and low-pressure gas. Then, the low-temperature and low-pressure refrigerant flows to the compressor to be compressed into a high-temperature and high-pressure gas. The high-temperature and high-pressure gaseous refrigerant enters the condenser of the water tank to be condensed and release heat, such that the water in the water tank is heated up. Meanwhile, the refrigerant after releasing heat turns into a medium-temperature and high-pressure liquid. Then the medium-temperature and high-pressure liquid refrigerant is turned into a low-temperature and low-pressure gas-liquid mixture under an action of the primary expansion valve, and then flows back to the evaporator to absorb heat and be heated up. This process repeats itself to realize the production of hot water.

However, when the water amount consumed by a user is small, the user waits for a long time for the water to be heated.

CN110986436A discloses a heat pump water heater. The heat pump water heater comprises an inner container and a heat pump unit. The heat pump unit comprises a compressor, a condenser, a first throttling device and an evaporator which are connected together. The condenser comprises a first sub-condenser, a second sub-condenser and a valve assembly, wherein the first sub-condenser is disposed on the inner container; the second sub-condenser is disposed on the inner container and is located below the first sub-condenser; and the valve assembly is connected between the first sub-condenser and the second sub-condenser, and the valve assembly is used for selectively throttling a refrigerant output from the first sub-condenser.

CN110500803A discloses a heat pump system. The heat pump system comprises a compressor, a first heat exchanger, a fan, a second heat exchanger, a temperature sensor, a four-way reversing valve and a control module, wherein an outlet of the compressor is connected to the first heat exchanger through the four-way reversing valve; the first heat exchanger comprises at least one coil pipe; the first heat exchanger is connected to the second heat exchanger through a pipeline; the second heat exchanger is connected to an inlet of the compressor through the four-way reversing valve; and the self-cleaning operation of a heat pump is realized through the self-cleaning steps of the control module.

CN112033003A discloses a method of controlling a heat pump water heater. The heat pump water heater comprises a first condenser and a second condenser which are disposed up and down along a water tank, a refrigerant outlet of the first condenser is connected with a refrigerant inlet of the second condenser through a first refrigerant branch pipe, and an adjusting valve is disposed on the first refrigerant branch pipe; and a refrigerant inlet of the second condenser is further connected with a refrigerant header pipe through a second refrigerant branch pipe, and a switch valve is disposed on the second refrigerant branch pipe. A controller is in communication connection with the adjusting valve and the switch valve respectively and used for controlling the switch valve to be opened and controlling the opening degree of the adjusting valve to be reduced to 20-30 B in the layered heating mode.

CN110906588A discloses a micro-channel heat exchanger, a heat pump water heater and a control method thereof. The micro-channel heat exchanger includes: two collecting tubes; a plurality of first micro-channel tubes disposed side by side and connected between the two collecting tubes to form a first heating flow path; a plurality of second micro-channel tubes disposed side by side and connected between the two collecting tubes to form a second heating flow path, and the second micro-channel tubes are located below the first micro-channel tubes; a valve assembly connected between the first heating flow path and the second heating flow path, and the valve assembly is configured to selectively throttle a refrigerant output from the first heating flow path.

### SUMMARY

The present invention is set out in the appended set of claims. Embodiments of this application provide a heat-pump water heater and a control method for the heat-pump water heater, which solves a problem in the prior art that users when have small water demand wait for the water to be heated for a long time.

The first aspect of the embodiments of this application provides a heat-pump water heater, including a water tank and a controller, where the water tank is divided into a plurality of heating areas along a height direction of the water tank, each of the heating areas is provided with a separate condenser, every two adjacent condensers are connected in series through a communicating pipe, such that a heat exchange unit is formed, a refrigerant inlet of a condenser at a first end of the heat exchange unit is connected to a refrigerant outlet of a compressor, and a refrigerant outlet of a condenser at a second end of the heat exchange unit is connected to a refrigerant inlet of an evaporator.

A primary expansion valve is provided between the refrigerant outlet of the condenser at the second end of the heat exchange unit and the refrigerant inlet of the evaporator, and each communicating pipe between every two adjacent condensers is provided with a secondary expansion valve, the controller is in communication connection with the primary expansion valve and the secondary expansion valve, and is configured to control an initial opening degree of the primary expansion valve to be larger than an initial opening degree of the secondary expansion valve in a rapid heating mode.

By dividing the water tank into a plurality of heating areas, and making each of the heating areas provide with a separate condenser, and connecting two adjacent condensers in series through a communicating pipe, a heat exchange unit is thus formed by all condensers together. A primary expansion valve is provided between the refrigerant outlet of the condenser at the second end of the heat exchange unit and the refrigerant inlet of the evaporator, and the pressure of the refrigerant can be adjusted by adjusting the opening degree of the primary expansion valve. In addition, each communicating pipe between every two adjacent condensers is provided with a secondary expansion valve, and the initial opening degree of the secondary expansion valve is smaller than that of the primary expansion valve in the rapid heating mode. In this way, in the rapid heating mode, the refrigerant is throttled to one or more heating areas, and only heats the water in the one or more heating areas, so that the heating speed is rapid, thereby achieving rapid heating. Moreover, when the user's hot water demand is small, there will be no energy waste caused by heating the water in the entire water tank to result in too much hot water.

In a possible implementation, a refrigerant inlet of the compressor is provided with a first temperature sensing device for measuring temperature of a refrigerant, and each of the heating areas is provided with a water temperature detection unit for measuring water temperature. The evaporator is provided with a temperature measurement unit for measuring temperature of the evaporator, and the first temperature sensing device, the water temperature detection unit, and the temperature measurement unit are all in communication connection with the controller.

The controller controls the primary expansion valve to adjust its opening degree in response to a first difference between a difference of temperatures measured by the first temperature sensing device and by the temperature measurement unit and a target suction superheat temperature difference.

The controller controls each secondary expansion valve between the condensers in two adjacent heating areas to adjust its opening degree in response to a second difference between a difference of temperatures detected by water temperature detection units in the two adjacent heating areas and a target temperature difference.

In a possible implementation, the refrigerant outlet of the compressor is provided with a second temperature sensing device, and the second temperature sensing device is in in communication connection with the controller; the controller controls the primary expansion valve and/or the secondary expansion valve to adjust their opening degrees in response to a temperature measured by the second temperature sensing device.

In a possible implementation, the heat-pump water heater further includes a motor and a fan, the fan is connected to the motor in a transmission way and provided close to the evaporator, the motor is electrically connected to the controller, the controller controls a rotation speed of the motor in response to the temperature measured by the second temperature sensing device.

In a possible implementation, every two adjacent heating areas are connected through a connection pipe, and connection pipes between every two adjacent heating areas are provided with flow limiting valves, respectively, the flow limiting valves are in communication connection with the controller, and the controller is configured to control at least part of the flow limiting valves to be closed in a rapid heating mode.

In a possible implementation, an electric heating element is provided in the water tank, and the electric heating element is configured to heat water stored in the water tank.

The second aspect of the embodiments of this application provides a control method for a heat-pump water heater, including:
starting the heat-pump water heater;
controlling, by a controller, an initial opening degree of a primary expansion valve to be larger than an initial opening degree of a secondary expansion valve according to a rapid-heating-mode instruction received by the controller.

By designing the initial opening degree of the primary expansion valve to be larger than the initial opening degree of the secondary expansion valve, more refrigerant is throttled to the top of the water tank, so that the water in the heating area at the top of the water tank can be heated rapidly, thereby avoiding users from waiting for a long time.

In a possible implementation, the control method further includes:
controlling, by the controller, the primary expansion valve to adjust its opening degree in response to a first difference between a difference of temperatures detected by a temperature measurement unit on an evaporator and by a first temperature sensing device and a target suction superheat temperature difference; and
measuring, by water temperature detection units, water temperatures in two adjacent heating areas, respectively, and controlling, by the controller, a secondary expansion valve between condensers in the heating areas to adjust its opening degree according to a second difference between a difference of the temperatures detected by the two water temperature detection units and a target temperature difference.

In a possible implementation, the controlling, by the controller, the primary expansion valve to adjust its opening degree in response to the first difference between the difference of the temperatures detected by the temperature measurement unit on the evaporator and by the first temperature sensing device and the target suction superheat temperature difference specifically includes:
when the first difference is larger than 0, controlling the primary expansion valve to increase its opening degree;
when the first difference is lower than 0, the opening of the primary expansion valve is controlled to be reduced degree.

In a possible implementation, the measuring, by the water temperature detection units, the water temperatures in the two adjacent heating areas respectively, and controlling, by the controller, the secondary expansion valve between the condensers provided in the heating areas to adjust its opening degree according to the second difference between the difference of temperatures detected by the two water temperature detection units and the target temperature difference specifically includes:
when the second difference is larger than 0, controlling the secondary expansion valve to increase its opening degree;
when the second difference is lower than 0, controlling the secondary expansion valve to reduce its opening degree.

In a possible implementation, the control method further includes controlling, by the controller, the primary expansion valve and/or the secondary expansion valve to adjust their opening degrees according to a relationship of values between the temperature detected by the second temperature sensing device and a first preset temperature.

In a possible implementation, the controlling, by the controller, the primary expansion valve and/or the secondary expansion valve to adjust its opening degree according to the relationship of values between the temperature detected by the second temperature sensing device and the first preset temperature specifically includes:

when the temperature detected by the second temperature sensing device is not lower than the first preset temperature, the controller controls the primary expansion valve and the secondary expansion valve to increase their opening degrees;

when the temperature detected by the second temperature sensing device is lower than the first preset temperature, the controller controls the primary expansion valve and/or the secondary expansion valve to adjust their opening degrees according to the relationship of values between the temperature detected by the second temperature sensing device and a second preset temperature, where the second preset temperature is lower than the first preset temperature.

In a possible implementation, the controlling, by the controller, the primary expansion valve and/or the secondary expansion valve to adjust their opening degrees according to the relationship of values between the temperature detected by the second temperature sensing device and the second preset temperature specifically includes:
when the temperature detected by the second temperature sensing device is not lower than the second preset temperature, the controller controls the primary expansion valve to increase its opening degree, and controls the second expansion valve to adjust its opening degree in response to the second difference;
when the temperature detected by the second temperature sensing device is lower than the second preset temperature, the controller controls the primary expansion valve to adjust its opening degree in response to the first difference, and controls the second expansion valve to adjust its opening degree in response to the second difference.

In a possible implementation, the control method further includes: controlling, by the controller, a rotation speed of a motor of the heat-pump water heater according to the relationship of values between the temperature detected by the second temperature sensing device and the first preset temperature.

In a possible implementation, the controller controls the initial opening degree of the primary expansion valve to be smaller than that of the secondary expansion valve according to a full-tank-heating-mode instruction received by the controller.

### BRIEF DESCRIPTION OF DRAWINGS

FIG. 1 is a schematic diagram of a heat-pump water heater according to an embodiment of this application.
FIG. 2 is a schematic diagram of another heat-pump water heater according to an embodiment of this application.
FIG. 3 is a schematic diagram of yet another heat-pump water heater according to an embodiment of this application.
FIG. 4 is a first schematic flowchart of a method for controlling a heat-pump water heater according to an embodiment of this application;
FIG. 5 is a second schematic flowchart of a method for controlling a heat-pump water heater according to an embodiment of this application.

### Explanation of reference signs:

1: Evaporator; 11: Temperature measurement unit;
2: Compressor;
3: Water tank; 31: Water temperature detection unit; 32: Sub-water tank; 33 Separation plate;
4: Heat exchange unit; 41: Condenser;
5: Primary expansion valve;
6: Secondary expansion valve;
7: Flow limiting valve;
8: First temperature sensing device;
9: Second temperature sensing device;
10: Fan.

### DESCRIPTION OF EMBODIMENTS

First of all, those skilled in the art should understand that these embodiments are only used to explain technical principle of this application, and are not intended to limit protection scope of this application. Those skilled in the art can make adjustments as needed so as to adapt to specific applications.

Secondly, it should be noted that in the description of this application, terms such as "inside" and "outside" indicating directions or positional relationships are based on the directions or positional relationships shown in accompanying drawings, which are only for convenience of description and are not intended to indicate or imply that the device or component must have a particular orientation, must be constructed or operated in a particular orientation, and thus should not be understood as limiting this application.

In addition, it should be noted that in the description of this application, unless otherwise specified and defined, the terms "connected with" and "connected to" should be understood in a broad sense, for example, the connection can be a fixed connection, a detachable connection, an integrated connection, a mechanical connection, an electrical connection, a direct connection, an indirect connection through a medium, or an internal communication between two components. For those skilled in the art, specific meanings of the above terms in this application can be understood according to specific situations.

Heat-pump water heater is a device that uses a refrigerant to absorb low-temperature heat energy in air and transfer it to a water tank to prepare hot water.

A heat-pump water heater includes a motor, a fan, an evaporator, a compressor, a water tank, and a condenser provided in the water tank. The fan is connected to the motor in a transmission way and is disposed near the evaporator, and the evaporator, compressor, and condenser are connected in sequence through refrigerant pipes to form a heat-pump circuit for circulating flow of a refrigerant. A primary expansion valve is arranged on a refrigerant pipe between a refrigerant outlet of the condenser and a refrigerant inlet of the evaporator, and the primary expansion valve is used to adjust flow amount of the refrigerant.

It should be understood that the fan and evaporator can be disposed separately outdoors, and the compressor, water tank, and primary expansion valve are disposed indoors. Alternatively, the fan, evaporator, compressor, and primary expansion valve can be disposed outdoors, and the water tank is provided indoors separately.

The evaporator includes a gas flow channel for a gas to flow and a pipe for the refrigerant to flow, and the gas flow channel and the pipe are intersected to realize heat exchange between the gas and the refrigerant.

When the heat-pump water heater is on service, the air in the external environment enters the evaporator from an air inlet of the evaporator under the drive of the fan, and performs a heat exchange with the refrigerant in a pipe of the evaporator. The refrigerant absorbs the heat energy of the air in the external environment, and then is heated up and gasified to become a low-temperature and low-pressure gas.

The refrigerant, after being heated up and gasified in the evaporator, turns into a high-temperature and high-pressure gas under the action of the compressor, and then flows into a pipe of the condenser. The refrigerant that flows through the condenser exchanges heat with the water in the water tank, thus the high-temperature and high-pressure refrigerant releases heat to make the water heated up to become hot water.

The refrigerant that loses heat in the condenser turns into a medium-temperature and high-pressure liquid, and then turns into a low-temperature and low-pressure gas-liquid mixture under the action of the primary expansion valve. The refrigerant, after being subjected to cooling and depressurization, flows back into the pipe of the evaporator to start a next cycle. After such reciprocating cycles, the production of hot water can be finally realized.

However, when a user's hot water consumption is small, for example, when the number of people who take a bath is small, if the above-mentioned heat-pump water heater is used to heat the water, the high-temperature and high-pressure refrigerant flowing through the condenser needs to exchange heat with a large amount of water during one cycle since the capacity of the water tank is large, so that the heat-pump water heater needs multiple heat pump cycles to heat the water. This not only leads to long heating time, long waiting time for a user, and inconvenient use, but also leads to a large amount of hot water left in the water tank after the user uses the hot water, and energy waste.

As for this, this application provides a heat-pump water heater and a control method for the heat-pump water heater. The heat-pump water heater has a water tank that is divided into a plurality of heating areas. In a rapid heating mode, a refrigerant is throttled to one or more heating areas of the plurality of heating areas, and only exchanges heat with the water in the one or more heating areas, so that the heating speed is rapid, thereby achieving rapid heating. Moreover, when a user's hot water consumption is small, there will be no energy waste caused by excessive hot water due to the heating of water in the entire water tank.

Preferred technical solutions of the heat-pump water heater according to embodiments of this application are set forth below.

### Example 1

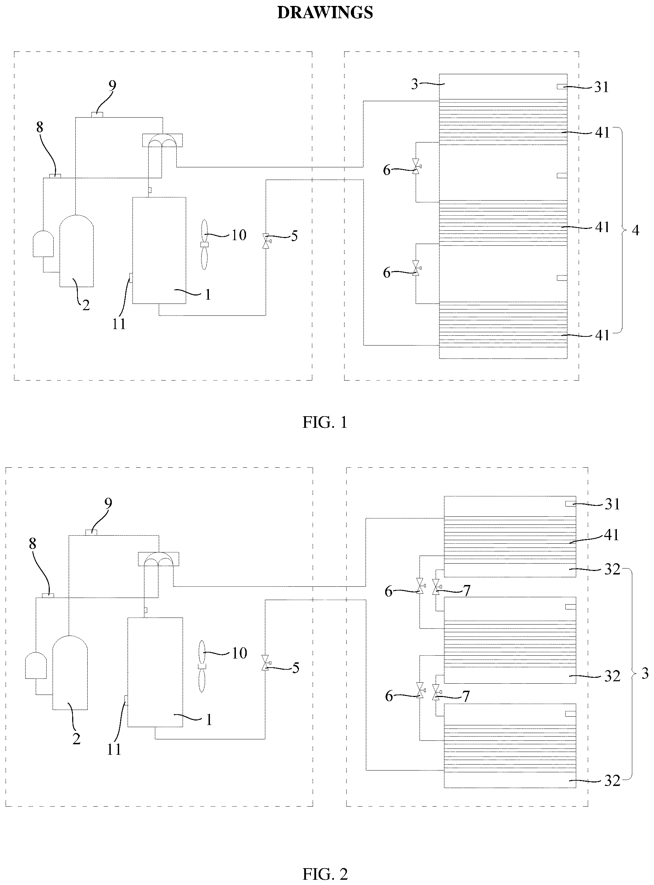

FIG. 1 is a schematic diagram of a heat-pump water heater according to an embodiment of this application. Referring to FIG. 1, this application provides a heat-pump water heater for quickly producing hot water to avoid long waiting time for a user.

In this heat-pump water heater, a water tank 3 is divided into a plurality of heating areas along a height direction of the water tank 3, and each of the heating areas is provided with a separate condenser 41, and every two adjacent condensers 41 are connected in series through a communicating pipe, such that a heat exchange unit 4 is formed, a refrigerant inlet of a condenser 41 at a first end of the heat exchange unit 4 is connected to a refrigerant outlet of a compressor 2, and a refrigerant outlet of a condenser 41 at a second end of the heat exchange unit 4 is connected to a refrigerant inlet of an evaporator 1.

The first end of the heat exchange unit 4 refers to a top end of the heat exchange unit 4 (that is, an upper end in FIG. 1), and the second end of the heat exchange unit 4 refers to a bottom end of the heat exchange unit 4 (that is, a lower end in FIG. 1).

It should be understood that, in this example, the heating areas are divided according to areas where condensers 41 are located in the water tank 3, that is, an area where one condenser 41 is located can be regarded as a heating area. Since the water tank 3 is present as a whole, the heating areas are interconnected with each other.

Exemplarily, when the water tank 3 is provided with two condensers 41 at intervals along the height direction of the water tank 3, the water tank 3 is divided into two heating areas. When the water tank 3 is provided with three condensers 41 at intervals along the height direction of the water tank 3, the water tank 3 is divided into three heating areas. Analogously, when the water tank 3 is provided with m (m is a positive integer) condensers 41 at intervals along the height direction of the water tank 3, the water tank 3 is divided into m heating areas.

For convenient description, along the height direction of the water tank 3 from top to bottom, the first heating area is called as a first heating area, the second heating area is called as a second heating area, the third heating area is called as a third heating area, and so on, which will not be described in detail in this example. All heating areas may have the same or different capacities, and the following examples will be described by taking all heating areas having the same capacity as an example.

In addition, it should be noted that the heat-pump water heater further includes a water supply device. The water supply device is connected to a water inlet provided at the bottom end of the water tank 3 to supply water to the water tank 3, so as to avoid exhaustion of the water in the water tank 3. The top end of the water tank 3 is provided with a water outlet connected to the outside, and then the hot water is exported from the top end of the water tank 3 to the outside for a user to use.

When the heat-pump water heater is running, the high-temperature and high-pressure refrigerant flowing out from the compressor 2 firstly flows into the condenser 41 at the first end of the heat exchange unit 4 and releases heat in the first heating area to heat the water in the first heating area, then the high-temperature and high-pressure refrigerant flows into the condenser 41 in the second heating area and releases heat in the second heating area to heat the water in the second heating area, until the high-temperature and high-pressure refrigerant flows to the condenser 41 at the second end of the heat exchange unit 4.

The heat-pump water heater further includes a controller. A primary expansion valve 5 is provided between the refrigerant outlet of the condenser 41 at the second end of the heat exchange unit 4 and the refrigerant inlet of the evaporator 1, and each communicating pipe between two adjacent condensers 41 is provided with a secondary expansion valve 6. The controller is in communication connection with the primary expansion valve 5 and the secondary expansion valve 6 for controlling an initial opening degree of the primary expansion valve 5 to be larger than an initial opening degree of the secondary expansion valve 6 in the rapid heating mode. Both the primary expansion valve 5 and the secondary expansion valve 6 play a throttling effect on the refrigerant, so that the pressure of the refrigerant flowing through the primary expansion valve 5 and the secondary expansion valve 6 is reduced.

Specifically, the number of the secondary expansion valve 6 is one less than the number of the heating areas. That is, when the water tank 3 is divided into m heating areas, m-1 secondary expansion valves 6 are provided. For example, when there are two condensers 41, that is, there are two heating areas, there is one secondary expansion valve 6.

Taking two heating areas as an example, when the heat-pump water heater is on service, since the initial opening degree of the secondary expansion valve 6 is smaller than the initial opening degree of the primary expansion valve 5, that is, the initial opening degree of the secondary expansion valve 6 is smaller, more refrigerant is throttled to the first heating area, and a small amount of refrigerant flows into the second heating area. Therefore, more refrigerant releases heat in the first heating area, so that the temperature of the water in the first heating area rises rapidly, thereby achieving rapid heating.

Referring to FIG. 1, taking three heating areas as an example, there are two secondary expansion valves 6. The initial opening degrees of the two secondary expansion valves 6 may be different or the same. For example, the initial opening degrees of the two secondary expansion valves 6 are different, and the secondary expansion valve 6 between the condenser 41 in the first heating area and the condenser 41 in the second heating area has an initial opening degree of 40%, and the secondary expansion valve 6 between the condenser 41 in the second heating area and the condenser 41 in the third heating area has an initial opening degree of 60%. In this way, when the heat-pump water heater is on service, the amount of refrigerant throttled to the first heating area is larger than the amount of refrigerant throttled to the second heating area, and the amount of refrigerant throttled to the second heating area is larger than the amount of refrigerant throttled to the third heating area. As a result, more refrigerant can be throttled to the first heating area to rapidly heat the water in the first heating area, thereby achieving rapid heating.

It can be understood that, in this example, the reasonable arrangement of the initial opening degrees of multiple secondary expansion valves 6 makes the refrigerant concentrated in the first heating area to heat the water in this area, or makes the refrigerant release heat mainly in the second heating area. In addition, since the water tank 3 is present as a whole, the heated hot water will flow upward into the first heating area according to the characteristic that hot water will flow upward, when the refrigerant mainly heats the water in the second heating area, thereby allowing the heat water to be exported from the top end of the water tank 3.

Therefore, compared with heating the water in the entire water tank 3, less water is needed to heat by the heat-pump water heater of this application in the rapid heating mode, thereby achieving rapid heating.

Moreover, by arranging the initial opening degree of the primary expansion valve 5 to be larger than the initial opening degree of the secondary expansion valve 6, it is possible to avoid the refrigerant throttled by the secondary expansion valve 6 from being throttled by the primary expansion valve 5, thereby avoiding the decrease of absorbed heat by the refrigerant at the evaporator 1 during the next cycle due to excessive low pressure of the throttled refrigerant.

To sum up, for the heat-pump water heater provided by this application, on the one hand, the water in part of the heating areas of the water tank 3 can exchange heat with more refrigerant to achieve rapid heating, thereby avoiding long waiting time for a user, and improving user experience; on the other hand, when the user's hot water consumption is small, the rapid heating mode can be used to heat the water in part of the heating areas to match the user's water consumption, thereby being beneficial to avoid energy waste.

As a possible implementation, the heating areas in the water tank 3 can also be separated, and every two adjacent heating areas are connected to each other through a connection pipe, and each connection pipe between two adjacent heating areas is provided with a flow limiting valve 7, and the flow limiting valve 7 plays a throttling effect on the water in the heating areas.

Specifically, there are many possible situations in which the heating areas are separated and two adjacent heating areas are connected to each other.

FIG. 2 is a schematic diagram of another heat-pump water heater according to an embodiment of this application. Referring to FIG. 2, in one situation, the heat-pump water heater includes multiple sub-water tanks 32 provided at intervals along the vertical direction, and the area inside each sub-water tank 32 is a heating area. In this example, each of the sub-water tanks 32 is provided with a separate condenser 41, and two adjacent sub-water tanks 32 are connected through a connection pipe. It can be understood that, when there are two sub-water tanks 32, the water tank 3 has two heating areas, and at this time, one flow limiting valve 7 is provided. When there are three sub-water tanks 32, the water tank 3 has three heating areas, and at this time, two flow limiting valves 7 are provided. Analogously, when there are n sub-water tanks 32 (n is a positive integer), the water tank 3 has n heating areas, and at this time, n flow limiting valves 7 are provided.

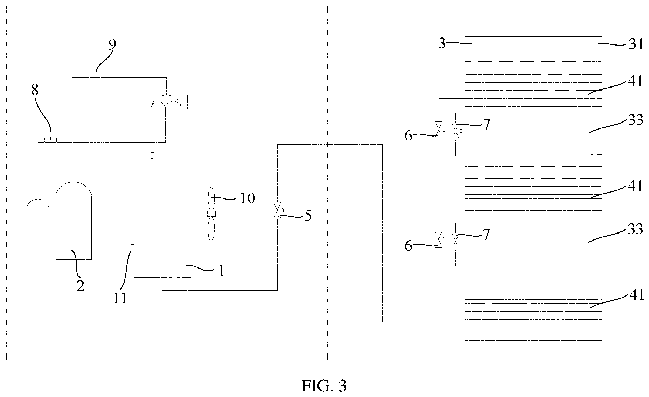

FIG. 3 is a schematic diagram of another heat-pump water heater according to an embodiment of this application. Referring to FIG. 3, in another situation, at least one separation plate 33 is provided in the water tank 3, and the separation plate 33 is provided parallel to the horizontal plane, and at least one separation plate 33 divides the whole water tank 3 into multiple heating areas. When there are multiple separation plates 33, the multiple separation plates 33 are provided at intervals along the vertical direction. In this example, two adjacent heating areas are connected through a connection pipe. It can be understood that, when the water tank 3 is provided with one separation plate 33, the water tank 3 has two heating areas, and at this time, one flow limiting valve 7 is provided. When the water tank 3 is provided with two separation plates 33, the water tank 3 has three heating areas, and two flow limiting valves 7 are provided. Analogously, when the water tank 3 is provided with N (N is a positive integer) separation plates 33, the water tank 3 has N+1 heating areas, and at this time, N flow limiting valves 7 are provided.

The flow limiting valves 7 are in communication connection with a control valve, and the control valve is used to control at least part of the flow limiting valves 7 to be closed in the rapid heating mode, so that all the heating areas in the rapid heating mode are not connected as a whole, the water in part of heating areas is heated, thereby achieving the heating of a small amount of water with rapid heating speed and without energy waste. The flow limiting valve 7 may be a solenoid valve.

Taking two heating areas as an example, there is one flow limiting valve 7 and one secondary expansion valve 6, and the controller controls the flow limiting valve 7 to be closed, so the first heating area and the second heating area are not connected. Meanwhile, the controller controls the initial opening degree of the secondary expansion valve 6 to be smaller than the initial opening degree of the primary expansion valve 5. When the heat-pump water heater is on service, a large amount of refrigerant releases heat in the first heating area, so that the water in the first heating area is heated up rapidly and turns into hot water, and the water in the first heating area and the water in the second heating area will not circulate with each other.

It should be pointed out that since the first heating area and the second heating area are not connected to each other, after a small amount of refrigerant passing through the secondary expansion valve 6 flows to the condenser 41 in the second heating area, the refrigerant releases heat to heat the water in the second heating area if the refrigerant flowing into the condenser 41 in the second heating area has a temperature higher than the temperature of the water in the second heating area, thereby playing a role in preheating the water in the second heating area. Therefore, when the water in the second heating area needs to be heated, the water in this area can be heated rapidly. If the temperature of the refrigerant flowing into the condenser 41 in the second heating area is lower than the temperature of the water in the second heating area, the refrigerant absorbs heat to make the water in the second heating area release heat, thereby achieving cooling.

Taking three heating areas as an example, there are two flow limiting valves 7 and two secondary expansion valves 6. For example, when the amount of hot water required by the user is small, the controller can control the two flow limiting values 7 to be closed, so that neither the first heating area is communicated with the second heating area, nor the second heating area is communicated with the third heating area. Meanwhile, the controller can control the secondary expansion valve 6 between the condenser 41 of the first heating area and the condenser 41 of the second heating area to have a small initial opening degree, so that a large amount of refrigerant stays in the first heating area, therefore, the water in the first heating area can be rapidly heated, which is matched with the user's hot water consumption. Alternatively, when the amount of hot water required by the user is moderate, the controller can also control the flow limiting valve 7 between the first heating area and the second heating area to be opened, and the flow limiting valve 7 between the second heating area and the third heating area to be closed, therefore, the first heating area is communicated with the second heating area, and the second heating area is not communicated with the third heating area. Meanwhile, the controller can control the secondary expansion valve 6 between the condenser 41 of the first heating area and the condenser 41 of the second heating area to have an initial opening degree larger than the initial opening degree of the secondary expansion valve 6 between the condenser 41 of the second heating area and the condenser 41 of the third heating area, so that most of the refrigerant stays in the first heating area and the second heating area, thus the water in the first heating area and the second heating area can be heated rapidly, which is matched with the user's hot water consumption.

In addition, the refrigerant inlet of the compressor 2 is provided with a first temperature sensing device 8 for measuring the temperature of the refrigerant, and the evaporator 1 is provided with a temperature measurement unit 11 for measuring the temperature of the evaporator 1, and the temperature measurement unit 11 and the first temperature sensing device 8 are all in communication connection with the controller. After the heat-pump water heater runs for a first preset time in the rapid heating mode, the controller controls the primary expansion valve 5 to adjust its opening degree in response to a first difference between a difference of temperatures measured by the first temperature sensing device 8 and the temperature measurement unit 11 and a target suction superheat temperature difference.

That is to say, the controller controls the primary expansion valve 5 to adjust its opening degree according to the relationship between the difference of the temperatures at the inlet of the compressor 2 and in the evaporator 1 due to the absorption of heat from the air and the target suction superheat temperature difference.

In this example, each of the heating areas is provided with a water temperature detection unit 31 for measuring water temperature, and the water temperature detection unit 31 is also in communication connection with the controller. After the heat-pump water heater runs for the first preset time in the rapid heating mode, the controller adjusts the opening degree of the primary expansion valve 5 in response to the first difference, and at the same time the controller also adjusts the opening degree of the secondary expansion valve 6 in response to a second difference. The second difference is a difference between a temperature difference detected by water temperature detection units 31 disposed in two adjacent heating areas and a target temperature difference.

When there are two heating areas, two water temperature detection units 31 are also provided. When there are three heating areas, three water temperature detection units 31 are also provided.

The first preset time is not limited to 6 minutes, and may be 10 minutes or 15 minutes, which is not limited in this example. In addition, both the temperature measurement unit 11 and the first temperature sensing device 8 can be temperature sensors, or other common examples in the field. The temperature measurement unit 11 can be provided on a coiled tube of the evaporator 1.

Through the above configuration, after the primary expansion valve 5 of the heat-pump water heater runs at the initial opening degree for the first preset time, the controller can utilize the first difference to determine the heat consumption of the refrigerant by refrigerant pipes between the evaporator 1 and the compressor 2, and thus analyze the operating state of the heat-pump water heater, and adjust the opening degree of the primary expansion valve 5 accordingly, thereby being beneficial to avoid low system efficiency due to the low temperature of the refrigerant flowing to the compressor 2 in the next cycle. At the same time, after the secondary expansion valve 6 of the heat-pump water heater runs at the initial opening degree for the first preset time, the controller utilizes the second difference to judge heat consumption of the refrigerant pipe between condensers 41 in two adjacent heating areas, and thus adjusts the opening degree of the secondary expansion valve 6 accordingly, thereby being beneficial to avoid the temperature of the refrigerant flowing to the next condenser 41 in the next cycle from being too low.

In some examples of this application, the refrigerant outlet of the compressor 2 is provided with a second temperature sensing device 9, and the second temperature sensing device 9 is in communication connection with the controller. The controller controls the primary expansion valve 5 and/or the secondary expansion valve 6 to adjust their opening degrees in response to the temperature measured by the second temperature sensing device 9.

That is to say, the controller controls the opening degrees of the primary expansion valve 5 and/or the secondary expansion valve 6 according to the discharge temperature of the compressor 2, thereby avoiding the temperature of the refrigerant entering the compressor 2 from being too high, This is beneficial to avoid the compressor 2 from frequent start and stop due to high discharge temperature and high load working condition of the compressor 2, so as to ensure the normal operation of the compressor 2 and ensure the heating efficiency.

Certainly, it can be understood that the heat-pump water heater of this application further has a full tank heating mode, and at this time the controller controls the initial opening degree of the primary expansion valve 5 to be smaller than the initial opening degree of the secondary expansion valve 6. Therefore, on the premise that the flow velocity of the refrigerant is constant, the amounts of heat exchanged by the high-temperature and high-pressure refrigerant in all heating areas are approximately the same, and the temperatures of water after being subjected to heat exchange in all heating areas of the water tank 3 are approximately the same.

That is to say, in the full tank heating mode, the refrigerant exchanges heat with the entire water tank 3 to heat the water in the entire water tank 3, so that a large amount of hot water is produced. This configuration is suitable for the user who requires a large amount of hot water, for example, it is suitable for the situation of many people taking baths.

When all heating areas in the water tank 3 are separated, every two adjacent heating areas are connected to each other through a connection pipe, and flow limiting valves 7 are respectively provided on the connection pipes between every two adjacent heating areas, the controller, under the full tank heating mode, is used to control all the flow limiting values 7 to be opened to the maximum, so that all the heating areas are communicated to each other to form a whole, therefore, the water in the entire water tank 3 is heated.

In combination with the foregoing description, the heat-pump water heater provided by this application has two modes of full tank heating and rapid heating to meet different requirements of users, resulting in good user experience.

Based on the above examples, an electric heating element is further provided in the water tank 3, and the electric heating element is used to heat the water stored in the water tank 3. The electric heating element may be a resistance wire, a PTC (Positive Temperature Coefficient) element, a heating wire, etc. Thus, the electric heating element is used to perform auxiliary heating on the water in the water tank 3, regardless of whether the heat-pump water heater is in the full tank heating mode or the rapid heating mode, the water in the water tank 3 can be rapidly heated to reduce the waiting time of the user.

Optionally, each of the heating areas may be provided with an electric heating element, and each electric heating element is electrically connected to the controller. In this example, in the full tank heating mode, the controller can control all electric heating elements to be heated, so that the water in the entire water tank 3 can be heated rapidly.

Alternatively, only the first heating area is provided with an electric heating element. Since the heated water in the water tank 3 is usually located at the top of the water tank 3, such configuration can rapidly heat the water in the heating area at the top of the water tank 3, thereby being beneficial to reduce the waiting time of the user.

### Example 2

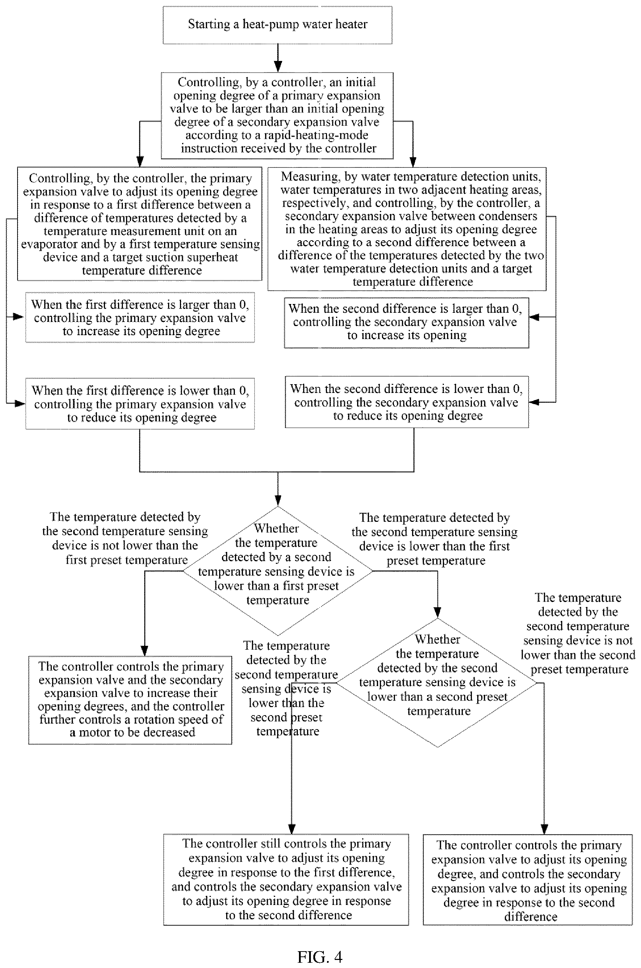

FIG. 4 is a first schematic flowchart of a control method for a heat-pump water heater according to an embodiment of this application. As shown in Figure 4, this application further provides a control method for a heat-pump water heater, including the following steps:
starting the heat-pump water heater; controlling, by a controller, an initial opening degree of a primary expansion valve 5 to be larger than an initial opening degree of a secondary expansion valve 6 according to a rapid-heating-mode instruction received by the controller.

It can be understood that the rapid-heating-mode instruction is an instruction generated by the heat-pump water heater when a user selects the heat-pump water heater to perform heating in the rapid heating mode, and the instruction is sent to the controller.

In this example, the initial opening degree of the primary expansion valve 5 and the initial opening degree of the secondary expansion valve 6 are not limited, for example, the primary expansion valve 5 can be opened to the maximum. Certainly, the opening degrees of the primary expansion valve 5 and the secondary expansion valve 6 can also be reasonably designed according to experience and actual needs. For example, according to the ambient temperature of the environment where the evaporator 1 is located and the temperature of the evaporator 1, the optimum initial opening degrees of the primary expansion valve 5 and the secondary expansion valve 6 can be tested and calculated.

In the control method for the heat-pump water heater provided in this application, the controller, after receiving the rapid-heating-mode instruction, controls the initial opening degrees of the primary expansion valve 5 and the secondary expansion valve 6, so that more refrigerant is throttled to the top of the water tank 3, therefore, the water in the heating area at the top of the water tank 3 can be heated rapidly, thereby avoiding long waiting time for the user.

Based on the above examples, the controller may also control at least part of the flow limiting values 7 to be closed while executing the step of controlling the initial opening degree of the primary expansion valve 5 to be larger than the initial opening degree of the secondary expansion valve 6.

The following briefly introduces possible control ways of the heat-pump water heater in the rapid heating mode in combination with the structure of the heat-pump water heater, but these control ways should not be regarded as specific limitations on the control method for the heat-pump water heater.

After the controller controls the initial opening degree of the primary expansion valve 5 to be larger than the initial opening degree of the secondary expansion valve 6 according to the received rapid-heating-mode instruction, the control method further includes: controlling, by the controller, the primary expansion valve 5 to adjust its opening degree in response to a first difference between a difference of temperatures detected by the temperature measurement unit 11 provided on the evaporator 1 and by the first temperature sensing device 8 and a target suction superheat temperature difference.

That is to say, the controller controls the primary expansion valve 5 to adjust its opening degree according to the relationship between the difference of temperatures at the inlet of the compressor 2 and in the evaporator 1 due to the absorption of heat from the air and the target suction superheat temperature difference.

The target suction superheat temperature difference is a theoretical superheat temperature difference, that is, the theoretical difference between the temperature of the inlet of the compressor 2 and the temperature of the evaporator 1 due to the absorption of heat from the air, which reflects heat consumption of the refrigerant during the flow of the refrigerant from the evaporator 1 to the compressor 2 along a refrigerant pipe. The target suction superheat temperature difference can be reasonably designed according to experience and actual needs.

It can be understood that the controller may perform this step after the heat-pump water heater has been running for the first preset time. The first preset time is not limited, for example, the first preset time may be 6 minutes, that is to say, the controller adjusts the opening degree of the primary expansion valve 5 according to the first difference after the heat-pump water heater has been turned on and run for 6 minutes.

Through the above configuration, it is possible to determine the heat consumption of the refrigerant by the refrigerant pipe between the evaporator 1 and the compressor 2, and adjust the opening degree of the primary expansion valve 5 accordingly, which is beneficial to avoid the temperature of the refrigerant flowing to the compressor 2 during the next cycle from being too low, resulting in low system efficiency.

The controller controls the primary expansion valve 5 to adjust its opening degree in response to the first difference, specifically including the following situations.

The first situation is that when the first difference is larger than 0, the controller controls the primary expansion valve 5 to increase its opening degree. In this example, the first difference being larger than 0 means that the heat consumption of the refrigerant during flowing from the evaporator 1 to the refrigerant inlet of the compressor 2 is too high, and the useless heat consumption is high. By increasing the opening degree of the primary expansion valve 5, it is beneficial to reduce the throttling effect of the primary expansion valve 5 on the refrigerant flowing therethrough, so that the pressure of the refrigerant flowing out of the evaporator 1 is relatively high, thus even if the refrigerant has high useless heat consumption when flowing through the refrigerant pipe between the evaporator 1 and the compressors 2, the refrigerant flowing into the compressor 2 still has high pressure, such that the compressor 2 work at full load and system performance is improved.

The second situation is that when the first difference is equal to 0, the controller maintains the opening degree of the primary expansion valve 5 to be constant. In this example, the first difference being equal to 0 means that the difference of the temperatures detected by the temperature measurement unit 11 provided on the evaporator 1 and by the first temperature sensing device 8 is equal to the target suction superheat temperature difference. At this time, the heat consumption of the refrigerant pipe between the evaporator 1 and the compressor 2 is in conformity with the theoretical value, thereby maintaining a constant opening degree, such that the system can still run at a better power.

The third situation is that when the first difference is lower than 0, the controller controls the primary expansion valve 5 to reduce its opening degree. In this example, the first difference being less than 0 means that the difference between the temperature at the inlet of the compressor 2 and the temperature in the evaporator 1 is small, which reflects small suction heat consumption of the refrigerant pipe between the evaporator 1 and the compressor 2, and at this time, the pressure of the refrigerant flowing into the compressor 2 is too high. By reducing the opening degree of the primary expansion valve 5, it is beneficial to increase the throttling effect of the primary expansion valve 5 on the refrigerant flowing therethrough, so that the pressure of the refrigerant flowing out of the evaporator 1 is reduced, therefore, even if the useless heat consumption is low when the refrigerant flows through the refrigerant pipe between the evaporator 1 and the compressor 2, the pressure of the refrigerant flowing into the compressor 2 is still low, thereby avoiding the refrigerant with excessive pressure from flowing into the compressor 2 to cause the compressor 2 to be overloaded.

Specifically, the opening degree of the primary expansion valve 5 can have a specific adjustment value of ΔP steps, ΔP=(Ts-Tz)-Δt, where Ts is the temperature detected by the first temperature sensing device 8, Tz is the temperature detected by the temperature measurement unit 11 disposed on the evaporator 1, and Δt is the target suction superheat temperature difference.

In addition, the controller responds to the first difference, at the same time the water temperature detection units 31 provided in two adjacent heating areas measure water temperatures, respectively, and the controller controls the secondary expansion valve 6 between the condensers 41 provided in the heating areas to adjust its opening degree according to a second difference between a difference of temperatures detected by the two water temperature detection units 31 and a target temperature difference.

Combined with FIG. 1 to FIG. 3, taking three heating areas as an example for illustration, the heating areas include a first heating area, a second heating area, and a third heating area from top to bottom. In this example, the controller calculates a difference between the temperature detected by the water temperature detection unit 31 in the first heating area and the temperature detected by the water temperature detection unit 31 in the second heating area, and then compares the obtained difference with the target temperature difference to obtain the second difference, and further controls the opening degree of the secondary expansion valve 6 located between the first heating area and the second heating area according to the second difference.

Similarly, the controller calculates a difference between the temperature detected by the water temperature detection unit 31 in the second heating area and the temperature detected by the water temperature detection unit 31 in the third heating area, and then compares the obtained difference with the target temperature difference to obtain the second temperature difference, and further controls the opening degree of the secondary expansion valve 6 located between the second heating area and the third heating area according to the second difference.

The target temperature difference is a theoretical temperature difference, that is, the theoretical water temperature difference between adjacent heating areas, which reflects the heat consumption of the refrigerant during the refrigerant flows from a condenser 41 of a heating area to a condenser 41 of a next heating area. In other words, it reflects the heat consumption of the refrigerant when the refrigerant flows through a refrigerant pipe between two adjacent condensers 41. Specifically, the target temperature difference can be reasonably designed according to experience and actual needs.

Through the above configuration, it is possible to determine the heat consumption of the refrigerant by the refrigerant pipe between two adjacent condensers 41, and adjust the opening degree of the secondary expansion valve 6 accordingly to avoid excessive useless consumption of the heat-pump water heater, so as to improve system efficiency.

The controller controls the secondary expansion valve 6 to adjust its opening degree in response to the second difference, specifically including the following situations.

The first situation is that when the second difference is larger than 0, the controller controls the secondary expansion valve 6 to increase its opening degree. In this example, the second difference being larger than 0 means that the heat consumption of the refrigerant by the refrigerant pipe between two adjacent condensers 41 is higher than the theoretical value, and the useless heat consumption is high. Therefore, by increasing the opening degree of the secondary expansion valve 6, it is beneficial to reduce the throttling effect of the secondary expansion valve 6 on the refrigerant flowing therethrough, so as to avoid excessive heat consumption of the refrigerant when the refrigerant subjected to a larger throttling effect flows to a next condenser 41, so that the water can be effectively heated by the heat of the refrigerant, thereby ensuring high heat exchange efficiency of the condensers 41 and improving system efficiency.

The second situation is that when the second difference is 0, the controller maintains the opening degree of the secondary expansion valve 6 to be constant. In this example, the second difference being 0 means that the heat consumption of the refrigerant by the refrigerant pipe between two adjacent condensers 41 is in conformity with the theoretical value, the opening degree is maintained to be constant, avoiding too high or too low heat consumption of the refrigerant.

The third situation is that when the second difference is lower than 0, the controller controls the secondary expansion valve 6 to reduce its opening degree. In this example, the second difference being less than 0 means that the heat consumption of the refrigerant by the refrigerant pipe between two adjacent condensers 41 is lower than the theoretical value. Therefore, by reducing the opening degree of the secondary expansion valve 6, the throttling effect of the secondary expansion valve 6 on the refrigerant flowing therethrough is increased, so as to prevent the refrigerant with too high temperature and too high pressure from flowing back to the compressor 2 to cause the compressor 2 to be overloaded.

Specifically, the opening degree of the secondary expansion valve 6 may have a specific adjustment value of VP steps, VP=(Tc_i-Tc_(i+1))-Vt, where Tc_i is the temperature detected by the water temperature detection unit 31 in the i^{th} heating area, Tc_(i+1) is the temperature detected by the water temperature detection unit 31 in the i+1^{th} heating area, and Vt is the target temperature difference, where i is a positive integer.

Exemplarily, when i=1, VP=(Tc_1-Tc_2)-Vt, where Tc_1 is the water temperature detected by the water temperature detection unit 31 in the first heating area, and Tc_2 is the water temperature detected by the water temperature detection unit 31 in the second heating area; when i=2, VP=(Tc_2-Tc_3)- Vt, where Tc_2 is the water temperature detected by the water temperature detection unit 31 in the second heating area, and Tc_3 is the water temperature detected by the water temperature detection unit 31 in the third heating area.

Further, the control method further includes: controlling, by the controller, the primary expansion valve 5 and/or the secondary expansion valve 6 to adjust their opening degrees according to the relationship of values between the temperature detected by the second temperature sensing device 9 and the first preset temperature.

The second temperature sensing device 9 detects the temperature at the refrigerant outlet of the compressor 2. In this example, the first preset temperature is not limited. Preferably, the first preset temperature may be a critical temperature value when the compressor 2 transitions from a normal operation state to an overload operation state. For example, the first preset temperature is 105°C.

It can be understood that the controller can perform this step on the heat pump water heater after individual intervals by the second preset time The second preset time is not limited, for example, the second preset time is 5s, that is to say, the controller adjusts the opening degree of the expansion valve according to the detected discharge temperature of the compressor 2 every 5s. Therefore, when the discharge temperature of the compressor 2 in the heat-pump water heater is high, the controller can correct it in time, so as to prevent the heat pump system from failing to work normally due to the frequent start and stop of the compressor 2.

Through the above configuration, the discharge temperature of the compressor 2 of the heat-pump water heater is monitored. When the discharge temperature is higher than a theoretical discharge temperature, the primary expansion valve 5 and/or the secondary expansion valve 6 are adjusted to make the compressor 2 run normally and prevent the compression 2 from starting and stopping frequently due to the overloaded running of the compression 2.

According to the relationship of values between the temperature detected by the second temperature sensing device 9 and the first preset temperature, the controller controls the expansion valve to adjust its opening degree, specifically including the following situation.

The first situation is that when the temperature detected by the second temperature sensing device 9 is not lower than the first preset temperature, that is, the discharge temperature of the compressor 2 is larger than or equal to the first preset temperature, the controller controls the primary expansion valve 5 and the secondary expansion valve 6 to increase their opening degrees. In this example, the discharge temperature of the compressor 2 being larger than or equal to the first preset temperature means that the discharge temperature of the compressor 2 has exceeded the critical temperature for the compressor 2 to work excessively. Therefore, the controller controls the primary expansion valve 5 and the secondary expansion valve 6 to increase their opening degrees, which is beneficial to reduce the pressure of the whole system of the heat-pump water heater, and further helps to reduce the load of the compressor 2.

Preferably, the controller can control the primary expansion valve 5 to be opened to the maximum, or the controller can adjust the opening degree of the primary expansion valve 5 according to the discharge temperature of the compressor 2. The higher the discharge temperature is, the higher the opening degree the primary expansion valve 5 is. Similarly, the opening degree of the secondary expansion valve 6 can also be adjusted according to the discharge temperature of the compressor 2, and the higher the discharge temperature is, the larger the opening degree the secondary expansion valve 6 is.

Further, when the temperature detected by the second temperature sensing device 9 is not lower than the first preset temperature, the controller may also control the motor to reduce its rotational speed. Therefore, when the discharge temperature of the compressor 2 is too high, the rotation speed of the motor is controlled to decrease, so that the rotation speed of the fan 10 is low, and the air entering the interior of the evaporator 1 is reduced, therefore it is beneficial to reduce the heat exchanging quantity of the evaporator 1, thereby reducing the discharge temperature of the compressor 2 to prevent the compressor 2 from shutting down due to the overloading of the compressor 2.

The second situation is that when the temperature detected by the second temperature sensing device 9 is lower than the first preset temperature, the controller controls the primary expansion valve 5 and/or the secondary expansion valve 6 to adjust their opening degrees according to the relationship of values between the temperature detected by the second temperature sensing device 9 and the second preset temperature. The second preset temperature is lower than the first preset temperature, and the second preset temperature is not limited. For example, if the second preset temperature is 100° C, the difference between the second preset temperature and the first preset temperature is small.

When the temperature detected by the second temperature sensing device 9 is lower than the second preset temperature, the controller still controls the primary expansion valve 5 to adjust its opening degree in response to the first difference, and controls the secondary expansion valve 6 to adjust its opening degree in response to the second difference. In this example, the discharge temperature of the compressor 2 being lower than the second preset temperature means that the discharge temperature of the compressor 2 is lower, that is, the discharge temperature of the compressor 2 still has a certain difference from the critical temperature of the overload operation of the compressor 2, and the compressor 2 is in a normal operation state at this time. Therefore, the control mode of the controller is remained unchanged for the primary expansion valve 5 and the secondary expansion valve, so that the compressor 2 is not overloaded.

When the temperature detected by the second temperature sensing device 9 is not lower than the second preset temperature, the controller controls the primary expansion valve 5 to increase its opening degree, and controls the secondary expansion valve 6 to adjust its opening degree in response to the second difference. In this example, the discharge temperature of the compressor 2 is lower than the first preset temperature, and at the same time larger than or equal to the second preset temperature, which means that the discharge temperature of the compressor 2 is close to the critical temperature of the overload operation of the compressor 2. Thus, by adjusting the primary expansion valve 5 to increase its opening degree, the controller reduces the system pressure of the heat-pump water heater to a certain extent, which is beneficial to timely prevent the discharge temperature of the compressor 2 from continuing to rise and exceed the first preset temperature, and thus is beneficial to avoid the overload operation of the compressor 2.

In this example, the controller can control the primary expansion valve 5 to be opened to the maximum, or the controller can adjust the opening degree of the primary expansion valve 5 according to the discharge temperature of the compressor 2, and the higher the discharge temperature is, the larger the opening degree of the primary expansion valve 5 is.

Further, the controller can further control the rotation speed of the motor to be reduced, so that the rotation speed of the motor-driven fan 10 is reduced, and the air entering the interior of the evaporator 1 is reduced, thereby being beneficial for the reduction of heat exchanging quantity of the evaporator 1, and reducing the discharge temperature of the compressor 2 to avoid continuous increase of the discharge temperature of the compressor 2.

### Example 3

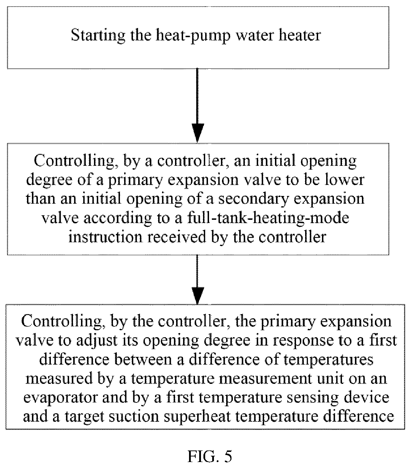

FIG. 5 is a second schematic flowchart of a control method for a heat-pump water heater according to an embodiment of this application. Referring to FIG. 5, this application provides another control method for the heat-pump water heater, specifically including the following steps:
starting the heat-pump water heater; controlling, by a controller, an initial opening degree of a primary expansion valve 5 to be lower than an initial opening degree of a secondary expansion valve 6 according to a full-tank-heating-mode instruction received by the controller.

It can be understood that the full-tank-heating-mode instruction is an instruction generated by the heat-pump water heater when a user selects the heat-pump water heater to perform heating in the full tank heating mode, and the instruction is sent to the controller.

In addition, when there are multiple secondary expansion valves 6, the opening degrees of the multiple secondary expansion valves 6 may be the same or different, as long as the opening degrees of all the secondary expansion valves 6 are larger than the opening degree of the primary expansion valve 5. Preferably, all the secondary expansion valves 6 are opened to the maximum to increase the heat exchanging quantity between the refrigerant and the water in the water tank 3, thereby improving the efficiency of heating the water in the entire water tank 3, and being beneficial to avoid the user from waiting too long for heating. Moreover, in the following control process, the controller can always control the opening degree of the secondary expansion valve 6 to be maximum.

It should be pointed out that, similar to the rapid heating mode, in the full tank heating mode, the opening degrees of the primary expansion valve 5 and the secondary expansion valve 6 are not limited when the heat-pump water heater is turned on. The opening degrees of the primary expansion valve 5 and of the secondary expansion valve 6 can be obtained through experiments and calculations according to the ambient temperature of the environment where the evaporator 1 is located and the temperature of the evaporator 1, and have different values from the opening degrees of the two in the rapid heating mode.

For the control method for the heat-pump water heater provided by this application, by controlling the opening degrees of the primary expansion valve and secondary expansion valve 6, the refrigerant can exchange heat in the entire water tank 3 as much as possible to heat the water in the entire water tank 3, therefore, the demand for large amount of hot water by the user can be met. In addition, the heat-pump water heater provided in this application has two modes of full tank heating and rapid heating to meet different demands of the user, and provide good user experience.

Based on the above-mentioned examples, when all heating areas in the water tank 3 are separated, and every two adjacent heating areas are communicated to each other through a connection pipe, and each connection pipe between two adjacent heating areas is provided with a flow limiting valve 7, the controller can also control all flow limiting valves 7 to be opened while performing the step of controlling the initial opening of the primary expansion valve 5 to be smaller than the initial opening of the secondary expansion valve 6.

The following briefly introduces possible control ways of the heat-pump water heater in the full tank heating mode in combination with the structure of the heat-pump water heater, but these control ways should not be regarded as specific limitations on the control method for the heat-pump water heater.

After the controller controls the opening degree of the primary expansion valve 5 to be smaller than the opening degree of the secondary expansion valve 6 according to the received full-tank-heating-mode instruction, the control method further includes: controlling, by the controller, the primary expansion valve 5 to adjust its opening degree in response to the first difference between the difference of the temperatures detected by the temperature measurement unit 11 provided on the evaporator 1 and by the first temperature sensing device 8 and the target suction superheat temperature difference. This control process is similar to the process in the rapid heating mode, and will not be described in detail herein.

It can be understood that the controller may perform this step after the heat-pump water heater has been running for a third preset time. Similar to the first preset time, the third preset time is not limited, for example, the third preset time is 6 mins.

Based on the above-mentioned examples, the control method further includes: controlling, by the controller, the primary expansion valve 5 to adjust its opening degree according the relationship of values between the temperature detected by the second temperature sensing device 9 and the first preset temperature as well as the second preset temperature. The first preset temperature is the same as the first preset temperature in Example 2, and the second preset temperature is the same as the second preset temperature in Example 2, that is, the second preset temperature is lower than the first preset temperature, for example, the first preset temperature is 150°C, and the second preset temperature is 100°C.

When the temperature detected by the second temperature sensing device 9 is between the second preset temperature and the first preset temperature, the controller controls the primary expansion valve 5 to increase its opening degree. In this example, the discharge temperature of the compressor 2 being between the second preset temperature and the first preset temperature means that the discharge temperature of the compressor 2 is close to the critical temperature of the overload operation of the compressor 2. Thus, by adjusting the primary expansion valve 5 to increase its opening degree, the controller reduces the system pressure of the heat-pump water heater to a certain extent, which is beneficial to timely prevent the discharge temperature of the compressor 2 from continuing to rise and exceed the first preset temperature, thereby being beneficial to avoid the overload operation of the compressor 2.

In this example, the controller can control the primary expansion valve 5 to be opened to the maximum, or the controller can adjust the opening degree of the primary expansion valve 5 according to the discharge temperature of the compressor 2, and the higher the discharge temperature is, the larger the opening degree of the primary expansion valve 5 is.

Further, the controller can further control the rotation speed of the motor to be reduced. Therefore, by controlling the rotation speed of the motor to be reduced, the air entering the evaporator 1 is reduced, thereby reducing the heat exchanging quantity of the evaporator 1. This is beneficial to reduce the discharge temperature of the compressor 2 to avoid continues increase in the discharge temperature of the compressor 2.

Finally, the technical solutions of this application have been described in combination with the preferred embodiments shown in the accompanying drawings. However, those skilled in the art can easily understand that the protection scope of this application is obviously not limited to these specific embodiments, but defined by the claims.

## Claims

1. A heat-pump water heater comprising: - a water tank (3); - an evaporator (1); - a compressor (2) having a refrigerant outlet; - a heat exchange unit (4) comprising at least one condenser (41) disposed on the water tank (3) and connected to the refrigerant outlet of the compressor (2); - a primary expansion valve (5) arranged between an outlet of the heat exchange unit (4) and an inlet of the evaporator (1); and - a controller in communication with the primary expansion valve (5), the controller being configured, in a rapid heating mode, to control an opening degree of the primary expansion valve (5), **characterised in that** the water tank (3) is divided into at least three heating areas along a height direction of the water tank (3), each of the heating areas is provided with a separate condenser (41), every two adjacent condensers (41) are connected in series through a communicating pipe such that the heat exchange unit (4) is formed, a refrigerant inlet of a condenser (41) at a first end of the heat exchange unit (4) is connected to the refrigerant outlet of the compressor (2), and a refrigerant outlet of a condenser (41) at a second end of the heat exchange unit (4) is connected to a refrigerant inlet of the evaporator (1); wherein each communicating pipe between every two adjacent condensers (41) is provided with a secondary expansion valve (6), the controller is in communication connection with the secondary expansion valves (6) and is configured, in the rapid heating mode, to control an initial opening degree of the primary expansion valve (5) to be larger than an initial opening degree of the secondary expansion valves (6); and wherein every two adjacent heating areas are connected through a connection pipe, connection pipes between every two adjacent heating areas are provided with flow limiting valves (7), respectively, the flow limiting valves (7) are in communication connection with the controller, and the controller is configured to control at least part of the flow limiting valves (7) to be closed in the rapid heating mode.

2. The heat-pump water heater according to claim 1, wherein a refrigerant inlet of the compressor (2) is provided with a first temperature sensing device (8) for measuring temperature of a refrigerant, and each of the heating areas is provided with a water temperature detection unit (31) for measuring water temperature, the evaporator (1) is provided with a temperature measurement unit (11) for measuring temperature of the evaporator (1), and the first temperature sensing device (8), the water temperature detection unit (31), and the temperature measurement unit (11) are all in communication connection with the controller;
the controller controls the primary expansion valve (5) to adjust its opening degree in response to a first difference between a difference of temperatures measured by the first temperature sensing device (8) and by the temperature measurement unit (11) and a target suction superheat temperature difference;
the controller controls each secondary expansion valve (6) between condensers (41) in two adjacent heating areas to adjust its opening degree in response to a second difference between a difference of temperatures detected by water temperature detection units (31) in the two adjacent heating areas and a target temperature difference.

3. The heat-pump water heater according to claim 1 or 2, wherein the refrigerant outlet of the compressor (2) is provided with a second temperature sensing device (9), and the second temperature sensing device (9) is in communication connection with the controller;
the controller controls the primary expansion valve (5) and/or the secondary expansion valve (6) to adjust their opening degrees in response to a temperature measured by the second temperature sensing device (9).

4. The heat-pump water heater according to claim 3, further comprising a motor and a fan (10), the fan (10) is connected to the motor in a transmission way and provided close to the evaporator (1), the motor is electrically connected to the controller, the controller controls a rotation speed of the motor in response to the temperature measured by the second temperature sensing device (9).

5. The heat-pump water heater according to any one of claims 1-4, wherein an electric heating element is provided in the water tank (3), and the electric heating element is configured to heat water stored in the water tank (3).

6. A control method for the heat-pump water heater according to claim 1, comprising:
starting the heat-pump water heater;
controlling, by a controller, an initial opening degree of a primary expansion valve (5) to be larger than an initial opening degree of a secondary expansion valve (6) according to a rapid-heating-mode instruction received by the controller.

7. The control method according to claim 6, further comprising:
controlling, by the controller, the primary expansion valve (5) to adjust its opening degree in response to a first difference between a difference of temperatures detected by a temperature measurement unit (11) on an evaporator (1) and by a first temperature sensing device (8) on a refrigerant inlet of a compressor (2) and a target suction superheat temperature difference; and
measuring, by water temperature detection units (31), water temperatures in two adjacent heating areas, respectively, and controlling, by the controller, a secondary expansion valve (6) between condensers (41) in the heating areas to adjust its opening degree according to a second difference between a difference of the temperatures detected by the two water temperature detection units (31) and a target temperature difference.

8. The control method according to claim 7, wherein the controlling, by the controller, the primary expansion valve (5) to adjust its opening degree in response to the first difference between the difference of the temperatures detected by the temperature measurement unit (11) on the evaporator (1) and by the first temperature sensing device (8) and the target suction superheat temperature difference specifically comprising:
when the first difference is larger than 0, controlling the primary expansion valve (5) to increase its opening degree;
when the first difference is lower than 0, controlling the primary expansion valve (5) to reduce its opening degree.

9. The control method according to claim 7 or 8, wherein the measuring, by the water temperature detection units (31), the water temperatures in the two adjacent heating areas respectively, and controlling, by the controller, the secondary expansion valve (6) between the condensers (41) provided in the heating areas to adjust its opening degree according to the second difference between the difference of temperatures detected by the two water temperature detection units (31) and the target temperature difference specifically comprising:
when the second difference is larger than 0, controlling the secondary expansion valve (6) to increase its opening degree;
when the second difference is lower than 0, controlling the secondary expansion valve (6) to reduce its opening degree.

10. The control method according to any one of claims 6-9, further comprising:
controlling, by the controller, the primary expansion valve (5) and/or the secondary expansion valve (6) to adjust their opening degrees according to a relationship of values between the temperature detected by the second temperature sensing device (9) and a first preset temperature.

11. The control method according to claim 10, wherein the controlling, by the controller, the primary expansion valve (5) and/or the secondary expansion valve (6) to adjust their opening degrees according to the relationship of values between the temperature detected by the second temperature sensing device (9) and the first preset temperature specifically comprising:
when the temperature detected by the second temperature sensing device (9) is not lower than the first preset temperature, the controller controls the primary expansion valve (5) and the secondary expansion valve (6) to increase their opening degrees;
when the temperature detected by the second temperature sensing device (9) is lower than the first preset temperature, the controller controls the primary expansion valve (5) and/or the secondary expansion valve (6) to adjust their opening degrees according to the relationship of values between the temperature detected by the second temperature sensing device (9) and a second preset temperature; wherein the second preset temperature is lower than the first preset temperature.

12. The control method according to claim 11, wherein the controlling, by the controller, the primary expansion valve (5) and/or the secondary expansion valve (6) to adjust their opening degrees according to the relationship of values between the temperature detected by the second temperature sensing device (9) and the second preset temperature specifically comprising:
when the temperature detected by the second temperature sensing device (9) is not lower than the second preset temperature, the controller controls the primary expansion valve (5) to increase its opening degree, and controls the second expansion valve to adjust its opening degree in response to the second difference;
when the temperature detected by the second temperature sensing device (9) is lower than the second preset temperature, the controller controls the primary expansion valve (5) to adjust its opening degree in response to the first difference, and controls the second expansion valve to adjust its opening degree in response to the second difference.

13. The control method according to any one of claims 10-12, further comprising:
controlling, by the controller, a rotation speed of a motor of the heat-pump water heater according to the relationship of values between the temperature detected by the second temperature sensing device (9) and the first preset temperature.

14. The control method according to any one of claims 6-13, further comprising:
controlling, by the controller, the initial opening degree of the primary expansion valve (5) to be smaller than that of the secondary expansion valve (6) according to a full-tank-heating-mode instruction received by the controller.

## Patentansprüche

1. Wärmepumpen-Warmwasserbereiter, umfassend: - einen Wassertank (3); - einen Verdampfer (1); - einen Verdichter (2), der einen Kältemittelauslass aufweist; - eine Wärmetauscheinheit (4), die mindestens einen Verflüssiger (41) umfasst, der an dem Wassertank (3) angeordnet und mit dem Kältemittelauslass des Verdichters (2) verbunden ist; - ein primäres Expansionsventil (5), das zwischen einem Auslass der Wärmetauscheinheit (4) und einem Einlass des Verdampfers (1) angeordnet ist; und - eine Steuerung, die mit dem primären Expansionsventil (5) in Verbindung steht, wobei die Steuerung konfiguriert ist, um in einem Schnellheizmodus einen Öffnungsgrad des primären Expansionsventils (5) zu steuern, **dadurch gekennzeichnet, dass** der Wassertank (3) entlang einer Höhenrichtung des Wassertanks (3) in mindestens drei Heizbereiche unterteilt ist, jeder der Heizbereiche mit einem separaten Verflüssiger (41) versehen ist, alle zwei benachbarten Verflüssiger (41) durch ein Kommunikationsrohr derart in Reihe geschaltet sind, dass die Wärmetauscheinheit (4) gebildet wird, ein Kältemitteleinlass eines Verflüssigers (41) an einem ersten Ende der Wärmetauscheinheit (4) mit dem Kältemittelauslass des Verdichters (2) verbunden ist und ein Kältemittelauslass eines Verflüssigers (41) an einem zweiten Ende der Wärmetauscheinheit (4) mit einem Kältemitteleinlass des Verdampfers (1) verbunden ist; wobei jedes Kommunikationsrohr zwischen allen zwei benachbarten Verflüssigern (41) mit einem sekundären Expansionsventil (6) versehen ist, die Steuerung mit den sekundären Expansionsventilen (6) in Kommunikationsverbindung steht und konfiguriert ist, um im Schnellheizmodus einen Anfangsöffnungsgrad des primären Expansionsventils (5) zu steuern, um ihn größer als einen Anfangsöffnungsgrad der sekundären Expansionsventile (6) einzustellen; und wobei alle zwei benachbarten Heizbereiche durch ein Verbindungsrohr verbunden sind, die Verbindungsrohre zwischen allen zwei benachbarten Heizbereichen jeweils mit Durchflussbegrenzungsventilen (7) versehen sind, die Durchflussbegrenzungsventile (7) mit der Steuerung in Kommunikationsverbindung stehen und die Steuerung konfiguriert ist, um mindestens einen Teil der Durchflussbegrenzungsventile (7) zu steuern, um sie im Schnellheizmodus zu schließen.

2. Wärmepumpen-Warmwasserbereiter nach Anspruch 1, wobei ein Kältemitteleinlass des Verdichters (2) mit einer ersten Temperaturerfassungsvorrichtung (8) zum Messen einer Temperatur eines Kältemittels versehen ist und jeder der Heizbereiche mit einer Wassertemperatur-Erkennungseinheit (31) zum Messen einer Wassertemperatur versehen ist, der Verdampfer (1) mit einer Temperaturmesseinheit (11) zum Messen einer Temperatur des Verdampfers (1) versehen ist und die erste Temperaturerfassungsvorrichtung (8), die Wassertemperatur-Erkennungseinheit (31) und die Temperaturmesseinheit (11) alle mit der Steuerung in Kommunikationsverbindung stehen;
die Steuerung das primäre Expansionsventil (5) steuert, um seinen Öffnungsgrad in Reaktion auf eine erste Differenz zwischen einer Differenz von Temperaturen, die durch die erste Temperaturerfassungsvorrichtung (8) und durch die Temperaturmesseinheit (11) gemessen werden, und einer Ziel-Saugüberhitzungs-Temperaturdifferenz einzustellen;
die Steuerung jedes sekundäre Expansionsventil (6) zwischen Verflüssigern (41) in zwei benachbarten Heizbereichen steuert, um seinen Öffnungsgrad in Reaktion auf eine zweite Differenz zwischen einer Differenz von Temperaturen, die durch Wassertemperatur-Erkennungseinheiten (31) in den zwei benachbarten Heizbereichen erkannt werden, und einer Ziel-Temperaturdifferenz einzustellen.

3. Wärmepumpen-Warmwasserbereiter nach Anspruch 1 oder 2, wobei der Kältemittelauslass des Verdichters (2) mit einer zweiten Temperaturerfassungsvorrichtung (9) versehen ist und die zweite Temperaturerfassungsvorrichtung (9) mit der Steuerung in Kommunikationsverbindung steht;
die Steuerung das primäre Expansionsventil (5) und/oder das sekundäre Expansionsventil (6) steuert, um deren Öffnungsgrade in Reaktion auf eine Temperatur einzustellen, die durch die zweite Temperaturerfassungsvorrichtung (9) gemessen wird.

4. Wärmepumpen-Warmwasserbereiter nach Anspruch 3, ferner umfassend einen Motor und ein Gebläse (10), wobei das Gebläse (10) mit dem Motor auf einem Übertragungsweg verbunden und nahe dem Verdampfer (1) vorgesehen ist, der Motor elektrisch mit der Steuerung verbunden ist, die Steuerung eine Drehzahl des Motors in Reaktion auf die Temperatur steuert, die durch die zweite Temperaturerfassungsvorrichtung (9) gemessen wird.

5. Wärmepumpen-Warmwasserbereiter nach einem der Ansprüche 1-4, wobei ein elektrisches Heizelement in dem Wassertank (3) vorgesehen ist und das elektrische Heizelement konfiguriert ist, um in dem Wassertank (3) gespeichertes Wasser zu erwärmen.

6. Steuerungsverfahren für den Wärmepumpen-Warmwasserbereiter nach Anspruch 1, umfassend:
Starten des Wärmepumpen-Warmwasserbereiters;
Steuern, durch eine Steuerung, eines Anfangsöffnungsgrads eines primären Expansionsventils (5), um ihn größer als einen Anfangsöffnungsgrad eines sekundären Expansionsventils (6) einzustellen, gemäß einer durch die Steuerung empfangenen Schnellheizmodus-Anweisung.

7. Steuerungsverfahren nach Anspruch 6, ferner umfassend:
Steuern, durch die Steuerung, des primären Expansionsventils (5), um seinen Öffnungsgrad in Reaktion auf eine erste Differenz zwischen einer Differenz von Temperaturen, die durch eine Temperaturmesseinheit (11) an einem Verdampfer (1) und durch eine erste Temperaturerfassungsvorrichtung (8) an einem Kältemitteleinlass eines Verdichters (2) erkannt werden, und einer Ziel-Saugüberhitzungs-Temperaturdifferenz einzustellen; und
Messen, durch Wassertemperatur-Erkennungseinheiten (31), von Wassertemperaturen in jeweils zwei benachbarten Heizbereichen und Steuern, durch die Steuerung, eines sekundären Expansionsventils (6) zwischen Verflüssigern (41) in den Heizbereichen, um seinen Öffnungsgrad gemäß einer zweiten Differenz zwischen einer Differenz der Temperaturen, die durch die zwei Wassertemperatur-Erkennungseinheiten (31) erkannt werden, und einer Ziel-Temperaturdifferenz einzustellen.

8. Steuerungsverfahren nach Anspruch 7, wobei das Steuern, durch die Steuerung, des primären Expansionsventils (5), um seinen Öffnungsgrad in Reaktion auf die erste Differenz zwischen der Differenz der Temperaturen, die durch die Temperaturmesseinheit (11) an dem Verdampfer (1) und durch die erste Temperaturerfassungsvorrichtung (8) erkannt werden, und die Ziel-Saugüberhitzungs-Temperaturdifferenz einzustellen, speziell umfasst:
wenn die erste Differenz größer als 0 ist, Steuern des primären Expansionsventils (5), um seinen Öffnungsgrad zu vergrößern;
wenn die erste Differenz kleiner als 0 ist, Steuern des primären Expansionsventils (5), um seinen Öffnungsgrad zu verringern.

9. Steuerungsverfahren nach Anspruch 7 oder 8, wobei das Messen, durch die Wassertemperatur-Erkennungseinheiten (31), der Wassertemperaturen in den jeweils zwei benachbarten Heizbereichen und das Steuern, durch die Steuerung, des sekundären Expansionsventils (6) zwischen den in den Heizbereichen vorgesehenen Verflüssigern (41), um seinen Öffnungsgrad gemäß der zweiten Differenz zwischen der Differenz von Temperaturen, die durch die zwei Wassertemperatur-Erkennungseinheiten (31) erkannt werden, und der Ziel-Temperaturdifferenz einzustellen, speziell umfasst:
wenn die zweite Differenz größer als 0 ist, Steuern des sekundären Expansionsventils (6), um seinen Öffnungsgrad zu vergrößern;
wenn die zweite Differenz kleiner als 0 ist, Steuern des sekundären Expansionsventils (6), um seinen Öffnungsgrad zu verringern.

10. Steuerungsverfahren nach einem der Ansprüche 6-9, ferner umfassend:
Steuern, durch die Steuerung, des primären Expansionsventils (5) und/oder des sekundären Expansionsventils (6), um deren Öffnungsgrade gemäß einer Beziehung von Werten zwischen der Temperatur, die durch die zweite Temperaturerfassungsvorrichtung (9) erkannt wird, und einer ersten voreingestellten Temperatur einzustellen.

11. Steuerungsverfahren nach Anspruch 10, wobei das Steuern, durch die Steuerung, des primären Expansionsventils (5) und/oder des sekundären Expansionsventils (6), um deren Öffnungsgrade gemäß der Beziehung von Werten zwischen der Temperatur, die durch die zweite Temperaturerfassungsvorrichtung (9) erkannt wird, und der ersten voreingestellten Temperatur einzustellen, speziell umfasst:
wenn die Temperatur, die durch die zweite Temperaturerfassungsvorrichtung (9) erkannt wird, nicht niedriger als die erste voreingestellte Temperatur ist, steuert die Steuerung das primäre Expansionsventil (5) und das sekundäre Expansionsventil (6), um deren Öffnungsgrade zu vergrößern;
wenn die Temperatur, die durch die zweite Temperaturerfassungsvorrichtung (9) erkannt wird, niedriger als die erste voreingestellte Temperatur ist, steuert die Steuerung das primäre Expansionsventil (5) und/oder das sekundäre Expansionsventil (6), um deren Öffnungsgrade gemäß der Beziehung von Werten zwischen der Temperatur, die durch die zweite Temperaturerfassungsvorrichtung (9) erkannt wird, und einer zweiten voreingestellten Temperatur einzustellen; wobei die zweite voreingestellte Temperatur niedriger als die erste voreingestellte Temperatur ist.

12. Steuerungsverfahren nach Anspruch 11, wobei das Steuern, durch die Steuerung, des primären Expansionsventils (5) und/oder des sekundären Expansionsventils (6), um deren Öffnungsgrade gemäß der Beziehung von Werten zwischen der Temperatur, die durch die second Temperaturerfassungsvorrichtung (9) erkannt wird, und der zweiten voreingestellten Temperatur einzustellen, speziell umfasst:
wenn die Temperatur, die durch die zweite Temperaturerfassungsvorrichtung (9) erkannt wird, nicht niedriger als die zweite voreingestellte Temperatur ist, steuert die Steuerung das primäre Expansionsventil (5), um seinen Öffnungsgrad zu vergrößern, und steuert das zweite Expansionsventil, um seinen Öffnungsgrad in Reaktion auf die zweite Differenz einzustellen;
wenn die Temperatur, die durch die zweite Temperaturerfassungsvorrichtung (9) erkannt wird, niedriger als die zweite voreingestellte Temperatur ist, steuert die Steuerung das primäre Expansionsventil (5), um seinen Öffnungsgrad in Reaktion auf die erste Differenz einzustellen, und steuert das zweite Expansionsventil, um seinen Öffnungsgrad in Reaktion auf die zweite Differenz einzustellen.

13. Steuerungsverfahren nach einem der Ansprüche 10-12, ferner umfassend:
Steuern, durch die Steuerung, einer Drehzahl eines Motors des Wärmepumpen-Warmwasserbereiters gemäß der Beziehung von Werten zwischen der Temperatur, die durch die zweite Temperaturerfassungsvorrichtung (9) erkannt wird, und der ersten voreingestellten Temperatur.

14. Steuerungsverfahren nach einem der Ansprüche 6-13, ferner umfassend:
Steuern, durch die Steuerung, des Anfangsöffnungsgrads des primären Expansionsventils (5), um ihn kleiner als den des sekundären Expansionsventils (6) einzustellen, gemäß einer durch die Steuerung empfangenen Vollbehälter-Heizmodus-Anweisung.

## Revendications

1. Chauffe-eau à pompe à chaleur comprenant : - un réservoir d'eau (3) ; - un évaporateur (1) ; - un compresseur (2) ayant une sortie de fluide frigorigène ; - un groupe d'échange de chaleur (4) comprenant au moins un condenseur (41) disposé sur le réservoir d'eau (3) et relié à la sortie de fluide frigorigène du compresseur (2) ; - une soupape d'expansion primaire (5) agencée entre une sortie de l'unité d'échange de chaleur (4) et une entrée de l'évaporateur (1) ; et - un dispositif de commande en communication avec la soupape d'expansion primaire (5), le dispositif de commande étant configuré, dans un mode de chauffage rapide, pour commander un degré d'ouverture de la soupape d'expansion primaire (5), **caractérisé en ce que** le réservoir d'eau (3) est divisé en au moins trois zones de chauffage dans un sens de la hauteur du réservoir d'eau (3), chacune des zones de chauffage est dotée d'un condenseur (41) séparé, deux condenseurs (41) adjacents sont reliés en série par un tuyau de communication de telle sorte que l'unité d'échange de chaleur (4) est formée, une entrée de fluide frigorigène d'un condenseur (41) au niveau d'une première extrémité de l'unité d'échange de chaleur (4) est reliée à la sortie de fluide frigorigène du compresseur (2), et une sortie de fluide frigorigène d'un condenseur (41) au niveau d'une seconde extrémité de l'unité d'échange de chaleur (4) est reliée à une entrée de fluide frigorigène de l'évaporateur (1) ; dans lequel chaque tuyau de communication entre deux condenseurs (41) adjacents est muni d'une soupape d'expansion secondaire (6), le dispositif de commande est en communication avec les soupapes d'expansion secondaires (6) et configuré, dans le mode de chauffage rapide, pour commander un degré d'ouverture initial de la soupape d'expansion primaire (5) pour qu'il soit supérieur au degré d'ouverture initial des soupapes d'expansion secondaires (6) ; et dans lequel chaque paire de zones de chauffage adjacentes sont reliées par un tuyau de liaison, des tuyaux de liaison entre chaque paire de zones de chauffage adjacentes sont respectivement munis de soupapes de limitation d'écoulement (7), les soupapes de limitation d'écoulement (7) sont en communication avec le dispositif de commande, et le dispositif de commande est configuré pour commander la fermeture d'au moins une partie des soupapes de limitation d'écoulement (7) dans le mode de chauffage rapide.

2. Chauffe-eau à pompe à chaleur selon la revendication 1, dans lequel une entrée de fluide frigorigène du compresseur (2) est munie d'un premier dispositif de détection de température (8) pour mesurer une température d'un fluide frigorigène, et chacune des zones de chauffage est munie d'une unité de détection de température d'eau (31) pour mesurer une température de l'eau, l'évaporateur (1) est muni d'une unité de mesure de température (11) pour mesurer une température de l'évaporateur (1), et le premier dispositif de détection de température (8), l'unité de détection de température d'eau (31) et l'unité de mesure de température (11) sont tous en communication avec le dispositif de commande ;
le dispositif de commande commande la soupape d'expansion primaire (5) pour ajuster son degré d'ouverture en réponse à une première différence entre une différence de températures mesurées par le premier dispositif de détection de température (8) et par l'unité de mesure de température (11) et une différence de température de surchauffe d'aspiration cible ; le dispositif de commande commande chaque soupape d'expansion secondaire (6) entre des condenseurs (41) dans deux zones de chauffage adjacentes pour ajuster son degré d'ouverture en réponse à une seconde différence entre une différence de températures détectées par les unités de détection de température d'eau (31) dans les deux zones de chauffage adjacentes et une différence de température cible.

3. Chauffe-eau à pompe à chaleur selon la revendication 1 ou 2, dans lequel la sortie de fluide frigorigène du compresseur (2) est munie d'un second dispositif de détection de température (9), et le second dispositif de détection de température (9) est en liaison de communication avec le dispositif de commande ;
le dispositif de commande commande la soupape d'expansion primaire (5) et/ou la soupape d'expansion secondaire (6) pour ajuster leurs degrés d'ouverture en réponse à une température mesurée par le second dispositif de détection de température (9).

4. Chauffe-eau à pompe à chaleur selon la revendication 3, comprenant en outre un moteur et un ventilateur (10), le ventilateur (10) est relié au moteur par transmission et fourni près de l'évaporateur (1), le moteur est connecté électriquement au dispositif de commande, le dispositif de commande commande une vitesse de rotation du moteur en réponse à la température mesurée par le second dispositif de détection de température (9).

5. Chauffe-eau à pompe à chaleur selon l'une quelconque des revendications 1 à 4, dans lequel un élément chauffant électrique est fourni dans le réservoir d'eau (3), et l'élément chauffant électrique est configuré pour chauffer l'eau stockée dans le réservoir d'eau (3).

6. Procédé de commande pour le chauffe-eau à pompe à chaleur selon la revendication 1, comprenant :
le démarrage du chauffe-eau à pompe à chaleur ;
la commande, par un dispositif de commande, d'un degré d'ouverture initial d'une soupape d'expansion primaire (5) pour qu'il soit supérieur à un degré d'ouverture initial d'une soupape d'expansion secondaire (6) selon une instruction de mode de chauffage rapide reçue par le dispositif de commande.

7. Procédé de commande selon la revendication 6, comprenant en outre :
la commande, par le dispositif de commande, de la soupape d'expansion primaire (5) pour ajuster son degré d'ouverture en réponse à une première différence entre une différence de températures détectées par une unité de mesure de température (11) sur un évaporateur (1) et par un premier dispositif de détection de température (8) sur une entrée de fluide frigorigène d'un compresseur (2) et une différence de température de surchauffe d'aspiration cible ; et
la mesure, par des unités de détection de température d'eau (31), de températures de l'eau dans deux zones de chauffage adjacentes, respectivement, et la commande, par le dispositif de commande, d'une soupape d'expansion secondaire (6) entre des condenseurs (41) dans les zones de chauffage pour ajuster son degré d'ouverture selon une seconde différence entre une différence des températures détectées par les deux unités de détection de température d'eau (31) et une différence de température cible.

8. Procédé de commande selon la revendication 7, dans lequel la commande, par le dispositif de commande, de la soupape d'expansion primaire (5) pour ajuster son degré d'ouverture en réponse à la première différence entre la différence des températures détectées par l'unité de mesure de température (11) sur l'évaporateur (1) et par le premier dispositif de détection de température (8) et la différence de température de surchauffe d'aspiration cible, comprenant spécifiquement :
lorsque la première différence est supérieure à 0, la commande de la soupape d'expansion primaire (5) pour augmenter son degré d'ouverture ;
lorsque la première différence est inférieure à 0, la commande de la soupape d'expansion primaire (5) pour réduire son degré d'ouverture.

9. Procédé de commande selon la revendication 7 ou 8, dans lequel la mesure, par les unités de détection de température d'eau (31), des températures de l'eau dans les deux zones de chauffage adjacentes respectivement, et la commande, par le dispositif de commande, de la soupape d'expansion secondaire (6) entre les condenseurs (41) fournis dans les zones de chauffage pour ajuster son degré d'ouverture selon la seconde différence entre la différence de températures détectées par les deux unités de détection de température d'eau (31) et la différence de température cible, comprenant spécifiquement :
lorsque la seconde différence est supérieure à 0, la commande de la soupape d'expansion secondaire (6) pour augmenter son degré d'ouverture ;
lorsque la seconde différence est inférieure à 0, la commande de la soupape d'expansion secondaire (6) pour réduire son degré d'ouverture.

10. Procédé de commande selon l'une quelconque des revendications 6 à 9, comprenant en outre :
la commande, par le dispositif de commande, de la soupape d'expansion primaire (5) et/ou de la soupape d'expansion secondaire (6) pour ajuster leurs degrés d'ouverture selon une relation de valeurs entre la température détectée par le second dispositif de détection de température (9) et une première température préréglée.

11. Procédé de commande selon la revendication 10, dans lequel la commande, par le dispositif de commande, de la soupape d'expansion primaire (5) et/ou de la soupape d'expansion secondaire (6) pour ajuster leurs degrés d'ouverture selon la relation de valeurs entre la température détectée par le second dispositif de détection de température (9) et la première température préréglée comprenant spécifiquement :
lorsque la température détectée par le second dispositif de détection de température (9) n'est pas inférieure à la première température préréglée, le dispositif de commande commande la soupape d'expansion primaire (5) et la soupape d'expansion secondaire (6) pour augmenter leurs degrés d'ouverture ;
lorsque la température détectée par le second dispositif de détection de température (9) est inférieure à la première température préréglée, le dispositif de commande commande la soupape d'expansion primaire (5) et/ou la soupape d'expansion secondaire (6) pour ajuster leurs degrés d'ouverture selon la relation de valeurs entre la température détectée par le second dispositif de détection de température (9) et une seconde température préréglée ; dans lequel la seconde température préréglée est inférieure à la première température préréglée.

12. Procédé de commande selon la revendication 11, dans lequel la commande, par le dispositif de commande, de la soupape d'expansion primaire (5) et/ou de la soupape d'expansion secondaire (6) pour ajuster leurs degrés d'ouverture selon la relation de valeurs entre la température détectée par le second dispositif de détection de température (9) et la seconde température préréglée comprenant spécifiquement :
lorsque la température détectée par le second dispositif de détection de température (9) n'est pas inférieure à la seconde température préréglée, le dispositif de commande commande la soupape d'expansion primaire (5) pour augmenter son degré d'ouverture, et commande la seconde soupape d'expansion pour ajuster son degré d'ouverture en réponse à la seconde différence ;
lorsque la température détectée par le second dispositif de détection de température (9) est inférieure à la seconde température préréglée, le dispositif de commande commande la soupape d'expansion primaire (5) pour ajuster son degré d'ouverture en réponse à la première différence, et commande la seconde soupape d'expansion pour ajuster son degré d'ouverture en réponse à la seconde différence.

13. Procédé de commande selon l'une quelconque des revendications 10 à 12, comprenant en outre :
la commande, par le dispositif de commande, d'une vitesse de rotation d'un moteur du chauffe-eau à pompe à chaleur selon la relation de valeurs entre la température détectée par le second dispositif de détection de température (9) et la première température préréglée.

14. Procédé de commande selon l'une quelconque des revendications 6 à 13, comprenant en outre :
la commande, par le dispositif de commande, du degré d'ouverture initial de la soupape d'expansion primaire (5) pour qu'il soit inférieur à celui de la soupape d'expansion secondaire (6) selon une instruction de mode de chauffage de réservoir complet reçue par le dispositif de commande.
